# EUROPÄISCHE PATENTSCHRIFT

(11) **EP 3 352 931 B1**
(45) Veröffentlichungstag und Bekanntmachung des Hinweises auf die Patenterteilung: **18.11.2020**
(21) Anmeldenummer: 16767267.4
(22) Anmeldetag: 19.09.2016
(51) Int. Cl.: B23B 27/00, B23P 9/02, C23C 4/02

(54) **WERKZEUG ZUM AUFRAUEN EINER BOHRLOCHOBERFLÄCHE**
TOOL FOR ROUGHENING A BOREHOLE SURFACE
OUTIL PERMETTANT DE RENDRE RUGUEUX UNE SURFACE D'ALESAGE

(30) Priorität: 23.09.2015 EP 15186464
(43) Veröffentlichungstag der Anmeldung: 01.08.2018
(73) Patentinhaber: Hilti Aktiengesellschaft, 9494 Schaan (LI)
(72) Erfinder: LEDERLE, Hans-Peter, 87471 Durach (DE); RENNER, Markus, 86438 Kissing (DE); STROBEL-SCHMIDT, Rainer, 86825 Bad Wörishofen (DE); POPP, Franz, 86807 Buchloe (DE); OSTERMEIER, Peter, 86911 Diessen (DE)
(74) Vertreter: Hilti Aktiengesellschaft Corporate Intellectual Property
(86) Internationale Anmeldenummer: PCT/EP2016/072121
(87) Internationale Veröffentlichungsnummer: WO 2017/050677

(56) Entgegenhaltungen:
- EP-A1- 0 068 227
- WO-A1-2005/084857
- DE-U1-202004 003 332
- FR-A- 1 116 686
- US-A1- 2002 160 705

## Beschreibung

Die Erfindung betrifft ein Werkzeug zum Aufrauen einer Bohrlochoberfläche, mit den Merkmalen des Oberbegriffs des Anspruchs 1. Ein solches Werkzeug ist aus der DE 196 10 442 A1 bekannt.

Zur Befestigung von Bauteilen an Untergründen ist es bekannt, profilierte Ankerstangen mittels einer chemischen Mörtelmasse in vorgefertigten Sacklochbohrungen des Untergrunds festzulegen. Die Sacklochbohrungen können mithilfe diamantbestückter Werkzeuge hergestellt werden. Die Bohrlochwand eines solchen Bohrlochs kann, abhängig von dem Material des Untergrunds, sehr glatt sein. Um auch hohe an der Ankerstange angreifende Zugkräfte zuverlässig auf den Untergrund zu übertragen, ist es von Vorteil, wenn die Mörtelmasse im ausgehärteten Zustand formschlüssig mit der Bohrlochwand zusammenwirkt. Dies kann dadurch erreicht werden, dass wenigstens ein Teil der Bohrlochwand maschinell aufgeraut bzw. mit einer Profilierung versehen wird.

Werkzeuge und Verfahren zum Aufrauen einer Bohrlochoberfläche der eingangs genannten Art dienen daher insbesondere dazu, die Tragfähigkeit von chemischen Mörtelmassen in diamantgebohrten Löchern zu erhöhen. Die vergleichsweise glatte innere Mantelfläche eines Bohrlochs wird dabei strukturiert und beispielsweise mit definierten Hinterschnitten versehen.

Es sind verschiedene Konzepte bekannt, derartige Hinterschnitte in eine Bohrlochoberfläche einzubringen. So beschreiben die DE 31 43 462 A1 und die DE 38 19 650 A1 jeweils Werkzeuge, an deren Werkzeugschaft eine konische bzw. ballige Anlagefläche vorgesehen ist, die es einem Anwender ermöglicht, der Werkzeugrotation manuell eine Taumelbewegung zu überlagern. Auf diese Weise wird der Werkzeugkopf in radialer Richtung ausgelenkt und dringt in die Bohrlochoberfläche ein.

Ferner ist es aus DE 103 34 150 A1 bekannt, einen Werkzeugkopf exzentrisch an einem Werkzeugschaft anzuordnen und auf diese Weise eine radiale Auslenkung der umfangsseitig an dem Werkzeugkopf angeordneten Schneiden zu erreichen.

Die DE 196 10 442 A1 schlägt eine asymmetrische Anordnung der Werkzeugschneiden vor, sodass das Werkzeug eine Unwucht aufweist, die im Bohrbetrieb eine Taumelbewegung erzeugt.

Bei den vorbekannten Lösungen ist nachteilig, dass sowohl der Bediener als auch das Bohrgerät aufgrund der Taumelbewegung des Werkzeugs stark durch Vibrationen belastet werden. Zudem ist das Ergebnis des Aufrauvorgangs abhängig von der Anwendungsdauer sowie der Maschinenführung des jeweiligen Anwenders. Weiter sind die zum Aufrauen üblicherweise verwendeten Schneidelemente, wie zum Beispiel Hartmetall- oder Diamantschneidkörper, starkem Verschleiß ausgesetzt, insbesondere, wenn diese während des Aufrauvorgangs auf Armierungseisen oder hartes Gestein treffen.

Vor diesem Hintergrund liegt der vorliegenden Erfindung die technische Problemstellung zugrunde, ein Werkzeug zum Aufrauen einer Bohrlochfläche anzugeben, welche die voranstehend beschriebenen Nachteile nicht oder zumindest in geringerem Maße aufweist und insbesondere in einfacher Weise das Aufrauen einer Bohrlochoberfläche ermöglicht, wobei der Einfluss des Anwenders minimiert und gleichzeitig der Anwendungskomfort erhöht wird.

Die voranstehend beschriebene technische Problemstellung wird durch ein Werkzeug zum Aufrauen einer Bohrlochoberfläche gelöst, mit einem Kopplungsabschnitt zum Einspannen des Werkzeugs in ein Bohrgerät und einem Werkzeugkopf zur Bearbeitung der Bohrlochoberfläche, wobei an dem Werkzeugkopf umfangsseitig angeordnete Schneidmittel vorgesehen sind. Der Werkzeugkopf weist wenigstens einen seitlich durchgehenden Schlitz auf, der sich ausgehend von einer Stirnseite des Werkzeugkopfs axial entlang einer Werkzeuglängsachse erstreckt.

Dadurch, dass der Werkzeugkopf stirnseitig in axialer Richtung geschlitzt ist, wird der Werkzeugkopf in frei auskragende Stege unterteilt, die radial nach innen einfedern können. Durch dieses radiale Einfedern des Werkzeugkopfs wird das Eindringen in ein Bohrloch ermöglicht. Die umfangsseitig angeordneten Schneidmittel können daher in radialer Richtung federnd elastisch gegen die aufzurauende Bohrlochoberfläche drücken. Auf diese Weise kann durch das Einführen des Werkzeugs in ein Bohrloch eine radiale Vorspannkraft zwischen dem Werkzeug und der Bohrlochoberfläche erzeugt werden, die bei einer Werkzeugrotation ein Eindringen der Schneidmittel in die Bohrlochoberfläche bewirkt. Die radialen Schnittkräfte werden daher durch eine federnd elastische Vorspannung erzeugt, ohne dass eine Taumelbewegung oder Exzenterbewegung des Werkzeugs erforderlich ist. Der Anwender muss daher lediglich eine einem Bohrvorgang entsprechende translatorische Werkzeugbewegung durchführen. Die Vibrationen des Werkzeugs während des Aufrauvorgangs können folglich minimiert werden. Zudem kann der Verschleiß der Schneidmittel durch die radiale Elastizität des Werkzeugkopfs reduziert werden. So können die Schneidmittel während des Aufrauvorgangs Kollisionsstrukturen wie Armierungseisen oder hartem Gestein ausweichen, in dem die Schneidmittel beim Kontakt mit diesen Materialien in radial nach innen gewandter Richtung verdrängt werden bzw. einfedern.

Insbesondere beschreiben die umfangsseitig angeordneten Schneidmittel einen Hüllkreis, dessen Durchmesser größer ist als der Nenndurchmesser des zu bearbeitenden Bohrlochs. Beim Einführen eines solchen Werkzeugs in das jeweilige Bohrloch werden die Stege mit ihren umfangsseitig angeordneten Schneidmitteln durch die Bohrlochoberfläche in radial nach innen gewandter Richtung verdrängt, sodass der Schlitz des Werkzeugkopfs verengt wird. Die Vorspannung des Werkzeugs ist in diesem Fall lediglich abhängig von den Dimensionen des Werkzeugs und dem Nenndurchmesser des Bohrlochs. Damit kann eine definierte, radiale Vorspannung des Werkzeugs erzeugt werden.

Erfindungsgemäß wird daher ein Werkzeug mit den Merkmalen des Anspruchs 1 angegeben, das in einfacher Weise das Aufrauen einer Bohrlochoberfläche ermöglicht, wobei der Einfluss des Anwenders minimiert und gleichzeitig der Anwendungskomfort erhöht wird.

Weitere Ausgestaltungen des erfindungsgemäßen Werkzeugs ergeben sich aus den abhängigen Ansprüchen und der Beschreibung bevorzugter Ausführungsbeispiele.

Gemäß einer Ausgestaltung des Werkzeugs kann der Werkzeugkopf wenigstens zwei sich entlang des Schlitzes erstreckende, radial federnde Stege aufweisen, die an ihren an die Stirnseite angrenzenden, freien Endabschnitten die umfangsseitigen Schneidmittel tragen. Durch die Anordnung der Schneidmittel nahe der Stirnseite wird das Einfedern der Stege in Richtung der Werkzeuglängsachse begünstigt, und das Bohrloch wird bis zum Ende aufgeraut. Insbesondere kann die axiale Längserstreckung des Schlitzes einem Vielfachen der axialen Längserstreckung des freien Endabschnitts entsprechen, an dem die Schneidmittel angeordnet sind. Je weiter der Schlitz in axialer Richtung in den Werkzeugkopf hineinreicht, umso größer ist der durch die Stege bereitgestellte Hebelarm, sodass das radial nach innen gerichtete Einfedern der im Bereich der Endabschnitte angeordneten Schneidmittel erleichtert wird.

Nach einer Weiterbildung des Werkzeugs kann der Werkzeugkopf wenigstens zwei sich kreuzende Schlitze aufweisen, die sich ausgehend von einer Stirnseite des Werkzeugkopfs axial entlang der Werkzeuglängsachse erstrecken. Der Werkzeugkopf kann folglich vier entlang der Schlitze erstreckte Stege aufweisen, die umfangsseitig jeweils die Schneidmittel tragen. Mit der Anzahl der Schlitze erhöht sich die radiale Elastizität des Werkzeugs, sodass das Werkzeug besonders einfach in ein Bohrloch eingeführt werden kann.

Gemäß einer weiteren Ausgestaltung der Erfindung kann eine Mehrzahl sich kreuzender Schlitze im Bereich des Werkzeugkopfs vorgesehen sein.

Um eine unterschiedliche Eindringtiefe der umfangsseitigen Schneidmittel während des Aufrauvorgangs zu erreichen, kann ein erster Schlitz entlang der Werkzeuglängsachse eine größere Länge aufweisen, als ein zweiter Schlitz.

Die Schlitze des Werkzeugkopfs können sich unter einem Winkel kleiner oder gleich 90° kreuzen. So können die Schlitze den Werkzeugkopf insbesondere im Wesentlichen senkrecht zueinander durchdringen. Zur Anpassung der radialen Steifigkeit einzelner Stege kann alternativ eine von 90° abweichende Winkelstellung der Schlitze vorgesehen werden, sodass die Stege unterschiedliche Querschnitte besitzen. Schließen beispielsweise zwei Schlitze einen Winkel kleiner 90° ein, so sind vier Stege gebildet. Ein erstes einander paarweise gegenüberliegend angeordnetes Stegepaar weist in diesem Fall eine geringere Wandstärke auf, als ein zweites, benachbart zu diesen Stegen angeordnetes Stegepaar. Somit können die radiale Steifigkeit der Stege und damit die Eindringtiefe der Schneidkörper während des Aufrauvorgangs eingestellt werden.

Gemäß einer weiteren Ausbildung ist das Werkzeug symmetrisch gestaltet. Insbesondere kann das Werkzeug derart ausgeführt sein, dass das Werkzeug eine homogene radiale Steifigkeit aufweist, sodass während des Aufrauvorgangs dynamische Lasten bzw. eine Unwucht aufgrund der Werkzeugvorspannung vermieden werden. So können wenigstens zwei Stege punktsymmetrisch zu einer Werkzeuglängsachse gebildet sein. Alternativ oder ergänzend können wenigstens zwei Stege spiegelsymmetrisch zu einer Werkzeugebene gebildet sein, wobei die Werkzeuglängsachse in der Werkzeugebene liegt. Insbesondere kann ein Schlitz derart in das Werkzeug eingeformt sein, das wenigstens zwei Stege einander zugewandte, im Wesentlichen parallele Planebenen aufweisen.

Für eine optimale Funktionalität des erfindungsgemäßen Werkzeugs kann es notwendig werden, den Schlitz über die Länge variabel auszugestalten. Die Schlitzbreite am Kopfende des Werkzeugkopfes ist bevorzugt so dimensioniert, dass sich die beiden Stege bei maximal notwendiger Einfederung der Schneidmittel gerade nicht berühren. Damit hängt die Schlitzbreite von dem Nenndurchmesser des Bohrlochs ab, für welches das erfindungsgemäße Werkzeug verwendet werden soll. Die Dimensionierung der Schlitzbreite am gegenüberliegenden Ende des Schlitzes, also an dem der Stirnseite des Werkzeugkopfes abgewandten Grund des Schlitzes definiert die Federsteifigkeit der Stege und kann notwendigerweise kleiner dimensioniert sein, als die erforderliche Schlitzbreite am Kopfende des Werkzeugkopfes. Dies kann beispielsweise über eine Abstufung im Schlitzverlauf ermöglicht werden. Gemäß einer Ausbildung des erfindungsgemäßen Werkzeugs weist der Schlitz über einen Bereich in Richtung der Werkzeuglängsachse, ausgehend vom Kopfende des Werkzeugkopfes eine größere Breite auf als über den anschließenden Bereich in Richtung seines der Stirnseite abgewandten Grundes. Ein derart gestaltetes Werkzeug eignet sich insbesondere für kleine Bohrlochdurchmesser.

Nach einer Weiterbildung des erfindungsgemäßen Werkzeugs kann der Schlitz an seinem der Stirnseite abgewandten Grund eine konkave Ausrundung aufweisen. Diese Ausrundung kann durch eine insbesondere quer zur Längserstreckung des Schlitzes in den Werkzeugkopf eingebrachte Durchgangsbohrung gebildet sein. Mithilfe der Ausrundung wird eine Kerbwirkung im Bereich des Grunds des Schlitzes reduziert und die Federsteifigkeit respektive die Anpresskraft der Schneidmittel an die Bohrlochwand eingestellt.

Erfindungsgemäß umfassen die Schneidmittel des Werkzeugs wenigstens zwei sich radial erstreckende, von der Werkzeuglängsachse wegweisende Hartmetall- und/oder Diamantstifte. Die Stifte bilden bevorzugt jeweils eine geometrisch bestimmte Schneide, die ein definiertes Einbringen von Furchen bzw. Hinterschneidungen in die Bohrlochoberfläche ermöglichen. Damit ist es möglich, die eingesetzten Stifte aus einem harten und die Stege aus einem elastischen Material herzustellen. Die Stifte enden radial nach außen insbesondere in einer Kugelstumpf- oder Halbkugelform.

Erfindungsgemäß sind die wenigstens zwei Hartmetall- und/oder Diamantstiften so vorgesehen, dass sie in axialer Richtung und/oder umfangsseitig an dem Werkzeugkopf verteilt angeordnet sind. So kann beispielsweise ein Steg einen einzelnen oder eine Mehrzahl von Hartmetallstiften tragen. Die Hartmetallstifte können an dem Steg umfangsseitig verteilt oder axial entlang der Werkzeuglängsrichtung aufeinanderfolgend angeordnet sein. So können an einem Steg beispielsweise zwei oder mehr, insbesondere drei, Hartmetallstifte vorgesehen sein. Die Hartmetallstifte können in einem der Stirnseite zugeordneten Endabschnitt des Stegs in axialer Richtung dicht gepackt bzw. eng benachbart zueinander angeordnet sein. Alternativ oder ergänzend können die Hartmetallstifte auf einer äußeren Mantelfläche des Stegs auf gleicher axialer Höhe jedoch mit einem Winkelabstand zueinander umfangsseitig verteilt angeordnet sein.

Der Werkzeugkopf des erfindungsgemäßen Werkzeugs ist im Wesentlichen kreiszylinderförmig. Der Durchmesser der den Zylinder in radialer Richtung begrenzenden äußeren Mantelflächen ist bevorzugt kleiner als der Nenndurchmesser eines zu bearbeitenden Bohrlochs. Erfindungsgemäß definieren auf der äußeren Mantelfläche angeordnete, in radialer Richtung nach außen weisende Hartmetall- und oder Diamantstifte den maximalen Durchmesser des Werkzeugs, wobei der Durchmesser eines durch die Hartmetall- oder Diamantstifte definierten Hüllkreises insbesondere größer ist als der Nenndurchmesser des zu bearbeitenden Bohrlochs. Durch das Einbringen eines oder mehrerer stirnseitiger Schlitze kann der zylinderförmige Werkzeugkopf in mehrere Stege unterteilt werden, deren äußere Mantelflächen in einem Schnitt quer zur Werkzeuglängsachse Kreissegmente, wie zum Beispiel einen Halb- oder Viertelkreis, beschreiben. Im Bereich eines Schlitzes können diese Stege einander zugewandte Planflächen aufweisen.

Eine vorteilhafte Weiterbildung des Werkzeugs kann zudem dadurch angegeben werden, dass der Kopplungsabschnitt an einem ersten Ende eines Werkzeugschafts und der Werkzeugkopf an einem entgegengesetzten zweiten Ende des Werkzeugschafts angeordnet ist, wobei der Werkzeugschaft in axialer Richtung wenigstens die doppelte, bevorzugt wenigstens die dreifache Länge des Werkzeugkopfs aufweist. Mit einem in dieser Weise gestalteten Werkzeug ist auch die Bearbeitung tiefer Bohrungen ohne weiteres möglich.

Der Durchmesser des Werkzeugschafts kann dem Durchmesser des Werkzeugkopfs entsprechend oder geringer sein als der Durchmesser des Werkzeugkopfs. Unabhängig davon kann der Durchmesser des Werkzeugschafts ferner dem Durchmesser des Kopplungsabschnitts entsprechen oder geringer sein als der Durchmesser des Kopplungsabschnitts. Das Werkzeug kann auf diese Weise leicht und flexibel gestaltet werden, wobei sich insgesamt die Handhabung im Betrieb verbessert.

Um die radialen Vorspannkräfte beim Betrieb des Werkzeugs zu erhöhen, ist der Schlitz gemäß einer Weiterbildung des erfindungsgemäßen Werkzeugs zumindest abschnittsweise mit einem elastischen Füllmaterial, insbesondere einem Elastomer, gefüllt. Durch das Füllmaterial kann die radiale Steifigkeit des Werkzeugkopfs erhöht werden. Weiter kann das Füllmaterial zur Dämpfung von Vibrationen bzw. Schwingungen während der Bearbeitung der Bohrlochoberfläche dienen.

Zur Optimierung der elastischen Eigenschaften kann der Werkzeugkopf eine ausgehend von der Stirnseite entlang der Werkzeuglängsachse erstreckte zylindrische Ausnehmung, insbesondere eine Bohrung, aufweisen, die bis in den sich an den Werkzeugkopf erstreckenden Schaft reichen kann.

Nach einer weiteren Ausgestaltung des erfindungsgemäßen Werkzeugs ist im Bereich des Werkzeugkopfs zusätzlich zu den umfangsseitigen Schneidmitteln eine geometrisch bestimmte Schneidengeometrie vorgesehen, insbesondere nach Art eines Bohrers. So kann die Stirnseite des Werkzeugkopfs eine axial entlang der Werkzeuglängsrichtung gespaltene bzw. geschlitzte Bohrerspitze aufweisen. Insbesondere können zwei Stege, die im Bereich einer äußeren Mantelfläche jeweils umfangsseitig Schneidmittel tragen, stirnseitig jeweils einen Schneidkeil ausbilden. Auf diese Weise kann ein axiales Eindringen des Werkzeugs insbesondere im Bereich eines Bohrlochgrunds erleichtert werden. Die Schneidkante kann durch eine am Steg angebrachte Schneidplatte oder durch den Steg selbst ausgebildet sein.

Der Nenndurchmesser des Bohrlochs kann dabei bevorzugt kleiner sein als der Durchmesser eines durch die umfangsseitigen Schneidmittel definierten Hüllkreises. Durch das Einführen des Werkzeugs in das Bohrloch wird das Werkzeug in einem solchen Fall in radialer Richtung federnd elastisch verspannt, wobei der Schlitz des Werkzeugs verengt wird. Durch eine Werkzeugrotation bewirken diese Verspannkräfte beim Aufrauen der Bohrlochoberfläche ein Eindringen der Schneidmittel in die Bohrlochoberfläche. Dabei können durch eine rein translatorische Werkzeugführung des Bedieners entlang einer Bohrlochlängsachse Hinterschneidungen die Bohrlochoberfläche eingebracht werden.

Die Bohrlochoberfläche kann ausgehend von einem Bohrlochgrund über die gesamte in axialer Richtung gemessene Länge aufgeraut werden. Auf eine reinigende Nachbehandlung des Bohrlochs, wie zum Beispiel Spülen oder Ausblasen, kann in diesem Fall verzichtet werden, da trotz des sich im Bohrlochgrund ansammelnden Bohrstaubs eine ausreichend große aufgeraute Fläche zur Verfügung steht.

Nachfolgend wird die Erfindung anhand einer Ausführungsbeispiele darstellenden Zeichnung näher beschrieben. Es zeigen jeweils schematisch:
- Fig. 1: eine erste Ausgestaltung eines erfindungsgemäßen Werkzeugs in einer perspektivischen Ansicht, einer Frontansicht und einer verkleinerten Seitenansicht;
- Fig. 2: eine zweite Ausgestaltung eines erfindungsgemäßen Werkzeugs in einer perspektivischen Ansicht einer Frontansicht und zwei Seitenansichten;
- Fig. 3a - 3c: Varianten zur Anordnung der Schlitze im Bereich des Werkzeugkopfs in perspektivischer und Frontansicht;
- Fig. 4a, 4b: Varianten zur Anordnung von Hartmetallstiften im Bereich des Werkzeugkopfs;
- Fig. 5: eine Ausgestaltung des Werkzeugkopfs mit einer Schneidengeometrie
- Fig. 6: eine Ausgestaltung des Werkzeugkopfs mit einer Abstufung im Schlitzverlauf.

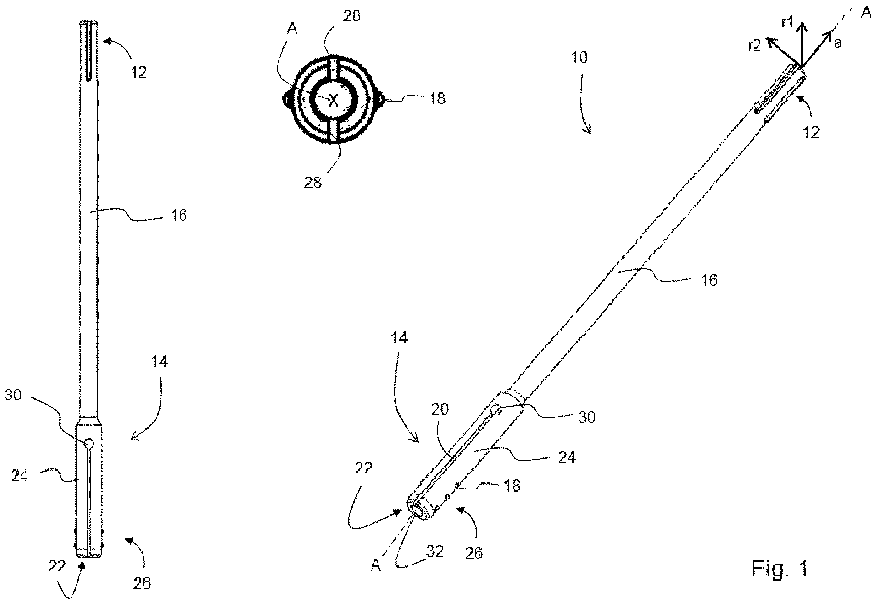

Figur 1 zeigt eine erste Ausgestaltung eines Werkzeugs 10 zum Aufrauen einer Bohrlochoberfläche.

Das Werkzeug 10 hat einen Kopplungsabschnitt 12 zum Einspannen des Werkzeugs 10 in ein Bohrgerät (nicht dargestellt), einen Werkzeugkopf 14 zur Bearbeitung einer Bohrlochoberfläche (nicht dargestellt) und einen Kopplungsabschnitt 12 und Werkzeugkopf 14 verbindenden Werkzeugschaft 16. Der Kopplungsabschnitt 12 ist an einem ersten Ende und der Werkzeugkopf 14 an einem dem ersten Ende entgegengesetzten zweiten Ende des Werkzeugschafts 16 angeordnet.

Der Werkzeugschaft 16 weist entlang einer axialen Richtung a mehr als die doppelte Länge des Werkzeugkopfs 14 auf. Der Durchmesser des Werkzeugschafts 16 entspricht dem des Kopplungsabschnitts 12 und ist geringer als der Durchmesser des Werkzeugkopfs 14 .

Der Werkzeugkopf 14 ist im Wesentlichen zylinderförmig und weist umfangsseitig angeordnete, radial abstehende Hartmetallstifte 18 auf. Die Hartmetallstifte 18 sind radial nach außen gewandt und erstrecken sich in einer radialen Richtung r2 quer zur axialen Richtung a.

Der Werkzeugkopf 14 weist einen Schlitz 20 auf, der sich ausgehend von einer Stirnseite 22 des Werkzeugkopfs 14 axial entlang einer Werkzeuglängsachse A erstreckt und seitlich von einem Mantelflächenabschnitt zu einem entgegengesetzten verläuft, das heißt seitlich durchgehend ist und den Werkzeugkopf 14 teilt.

Der Werkzeugkopf 14 weist somit zwei sich entlang des Schlitzes 20 erstreckende Stege 24 auf. Die Stege 24 tragen an ihren an die Stirnseite 22 angrenzenden, freien Endabschnitten 26 die umfangsseitigen Hartmetallstifte 18.

An jedem Steg sind zum Beispiel drei in axialer Richtung benachbart zueinander angeordnete Hartmetallstifte 18 vorgesehen. Es versteht sich, dass alternativ oder ergänzend Diamantstifte als Schneidmittel vorgesehen sein können.

Die Stege 24 sind spiegelsymmetrisch zu einer von der axialen Richtung a und der radialen Richtung r1 aufgespannten Ebene gestaltet. Die Stege 24 weisen einander zugewandte Planflächen 28 auf, die einen konstanten Abstand zueinander haben. Mit anderen Worten hat der Schlitz 20 eine im Wesentlichen konstante Lückenweite.

Der Schlitz hat an seinem der Stirnseite 22 abgewandten Grund eine konkave Ausrundung 30. Die Ausrundung 30 ist eine radiale Durchgangsbohrung. Der Werkzeugkopf 14 weist eine sich ausgehend von der Stirnseite 22 entlang der Werkzeuglängsachse A erstreckende zylindrische Ausnehmung 32 auf, die hier als Bohrung ausgeführt ist.

Zum Aufrauen einer Bohrlochoberfläche wird das Werkzeug 10 mit seinem Werkzeugkopf 14 in ein Bohrloch eingeführt. Das Werkzeug 10 ist dabei mit dem Kopplungsabschnitt 12 in ein Bohrgerät eingespannt. Der Nenndurchmesser des Bohrlochs ist kleiner als ein durch die Hartmetallstifte 18 definierter äußerer Hüllkreisdurchmesser des Werkzeugs 10. Beim Einführen des Werkzeugkopfs 14 in das Bohrloch werden die Hartmetallstifte 18 daher durch die Bohrlochoberfläche radial in Richtung der Werkzeuglängsachse A nach innen verdrängt. Der Schlitz 20 wird auf diese Weise verengt. In diesem Zustand liegen die Hartmetallstifte 18 an der Bohrlochoberfläche an und sind über die elastisch nach innen gebogenen Stege 24 federnd elastisch gegen die Bohrlochoberfläche gespannt.

Eine durch das Bohrgerät bewirkte Werkzeugrotation führt dazu, dass die Hartmetallstifte 18 in die Bohrlochoberfläche eindringen und Furchen bzw. Hinterschneidungen in die Bohrlochoberfläche einbringen. Bei dem Bohrloch kann es sich um ein Sackloch handeln.

Zum Aufrauen der Bohrlochoberfläche muss das Werkzeug 10 lediglich translatorisch entlang seiner Werkzeuglängsachse A in das Bohrloch eingeführt werden. Die radialen Schnittkräfte werden einzig durch die federnd elastische Vorspannung des Werkzeugkopfs 14 erreicht, sodass keine radiale Kraft durch den Anwender in das Werkzeug 10 eingeleitet werden muss.

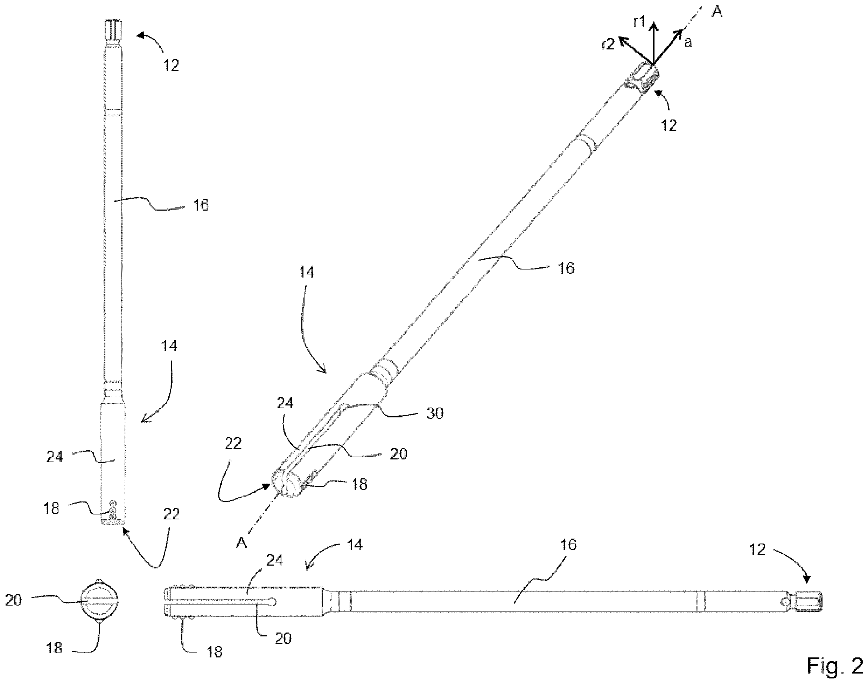

Figur 2 zeigt eine zweite Ausgestaltung eines Werkzeugs 10. Der grundsätzliche Aufbau und die Funktionsweise des in Figur 2 dargestellten Werkzeugs 10 entsprechen im Wesentlichen der zuvor mit Bezug zu Figur 1 beschriebenen Ausführungsform. Gleichen Merkmalen werden nachstehend daher gleiche Bezugszeichen zugeordnet, wobei nur auf die Unterschiede zwischen den einzelnen Werkzeugen eingegangen wird.

Das in Figur 2 dargestellte Werkzeug 10 weist einen im Vergleich zu Figur 1 abgewandelten Kopplungsabschnitt 12 auf. Auf eine stirnseitige Bohrung 32 ist in dem hier dargestellten Ausführungsbeispiel verzichtet worden, sodass lediglich ein Schlitz 20 vorhanden ist. Die im Endabschnitt 26 angeordneten Hartmetallstifte 18 sind in axialer Richtung a dichter gepackt als in dem voranstehend beschriebenen Beispiel.

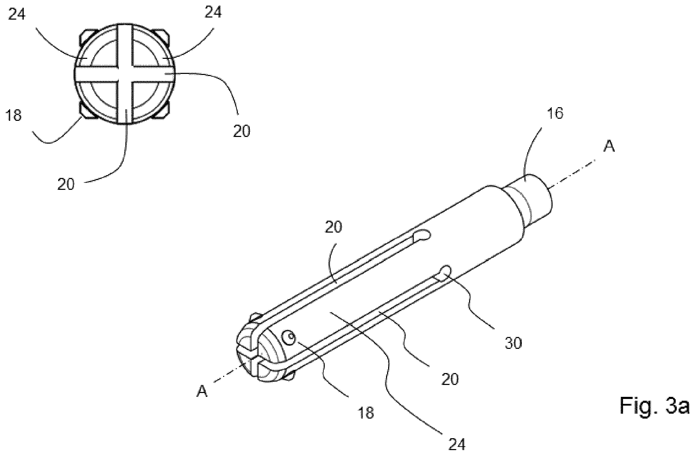

Die Figuren 3a bis 3c veranschaulichen drei verschiedene Varianten zur Anordnung von Schlitzen 20 im Bereich des Werkzeugkopfs 14. Figur 3a zeigt einen Werkzeugkopf 14 in einer perspektivischen Ansicht und einer Frontalansicht. Der Werkzeugkopf 14 weist zwei sich in der Mittelachse des Werkzeugs kreuzende Schlitze 20 auf, sodass insgesamt vier Stege 22 gebildet sind, die jeweils einen Hartmetallstift 18 tragen. Der Werkzeugkopf 14 ist symmetrisch aufgebaut.

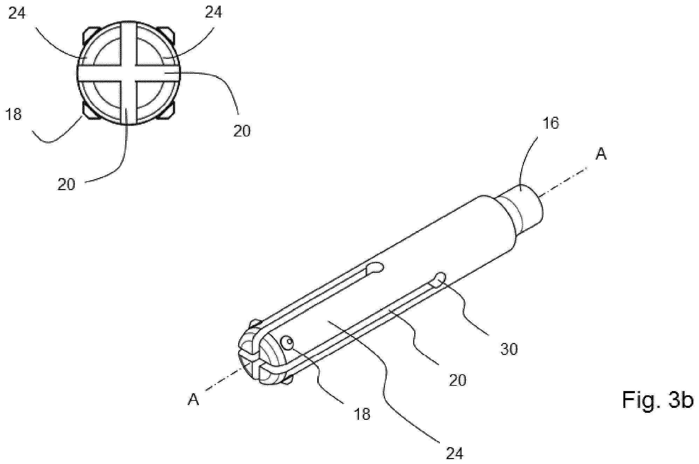

Figur 3b zeigt ebenfalls einen Werkzeugkopf 14 mit zwei sich kreuzenden Schlitzen 20, wobei jedoch einer der Schlitze 20 entlang der Werkzeuglängsachse eine größere Länge aufweist als der andere Schlitz.

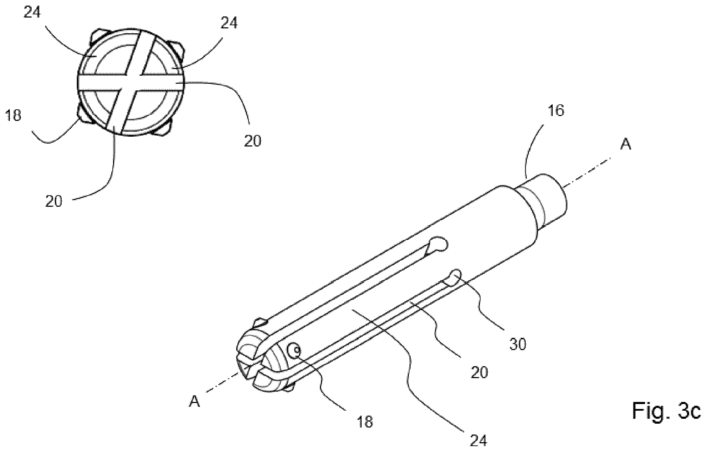

Figur 3c zeigt eine weitere Variante eines Werkzeugkopfs 14, der sich von den voranstehend beschriebenen Varianten dadurch unterscheidet, dass die Schlitze 20 den Werkzeugkopf 14 nicht unter einem rechten Winkel durchdringen, sondern schräg zueinander orientiert sind. Die einander paarweise gegenüberliegend angeordneten Stege 24 weisen daher unterschiedliche Wandstärken und Querschnitte auf, wie der Frontalansicht zu entnehmen ist.

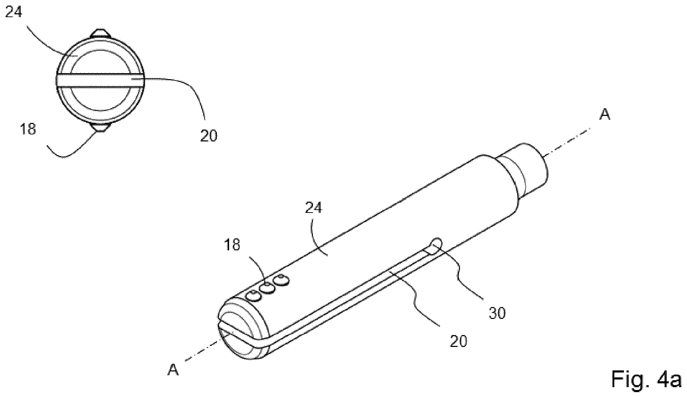

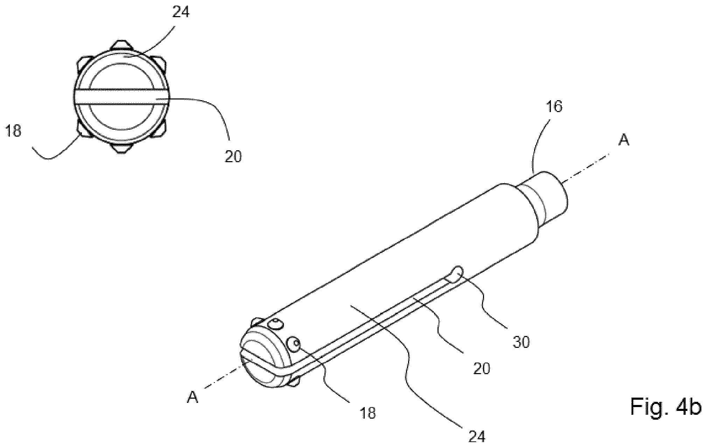

Die Figuren 4a und 4b zeigen Varianten zur Anordnung von Hartmetallstiften 18 im Bereich des Werkzeugkopfs 14. Figur 4a zeigt eine axiale Anordnung der Hartmetallstifte, während Figur 4b eine umfangsseitige Verteilung darstellt, bei der die Hartmetallstifte relativ zur Werkzeuglängsachse unter einem Winkelabstand zueinander angeordnet sind.

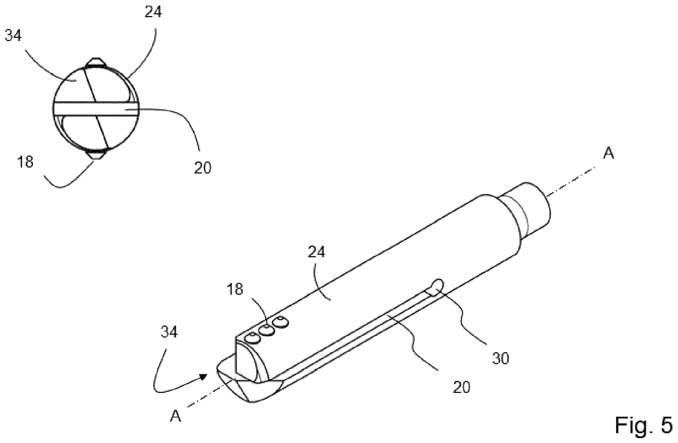

Figur 5 zeigt eine Ausgestaltung des Werkzeugkopfs 14 mit einer Schneidengeometrie 34. Die Stege 24 sind stirnseitig nach Art eines Bohrers geformt, wobei durch den Schlitz 20 eine entlang der Werkzeuglängsachse A gespaltene Bohrerspitze gebildet ist.

Natürlich kann der Werkzeugkopf 14 separat hergestellt und am Schaft lösbar oder unlösbar angebracht sein.

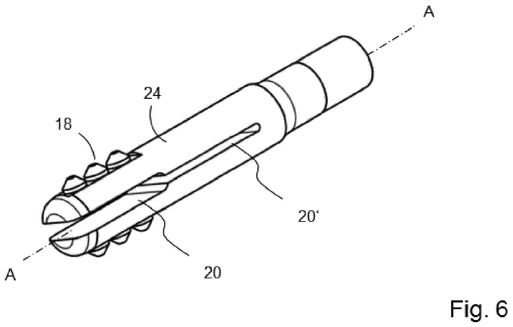

Figur 6 zeigt eine Ausgestaltung des Werkzeugkopfs 14 mit einer Abstufung im Schlitzverlauf, so dass der Schlitz 20, 20' eine entlang der Werkzeugachse A unterschiedliche Schlitzbreite aufweist, wobei der Schlitz über einen Bereich (Schlitz 20) in Richtung der Werkzeuglängsachse, ausgehend vom Kopfende des Werkzeugkopfes eine größere Breite auf als über den anschließenden Bereich (Schlitz 20') in Richtung seines der Stirnseite abgewandten Grundes. Durch den breiteren Schlitzbereich 20 können insbesondere bei kleinen Bohrlochdurchmessern die Stege 24 am Werkzeugkopfende entsprechend des Bohrlochdurchmessers in Richtung der Werkzeuglängsachse A weitgenug einfedern, wobei die Federkraft durch den schmaleren Schlitz 20' eingestellt wird.

## Patentansprüche

1. Werkzeug zum Aufrauen einer Bohrlochoberfläche, mit einem Kopplungsabschnitt (12) zum Einspannen des Werkzeugs (10) in ein Bohrgerät und einem Werkzeugkopf (14) zur Bearbeitung der Bohrlochoberfläche, wobei an dem Werkzeugkopf (14) umfangsseitig angeordnete Schneidmittel (18) vorgesehen sind, wobei die Schneidmittel (18) wenigstens zwei radial von der Werkzeuglängsachse wegweisende Hartmetall- und/oder Diamantstifte umfassen, die in axialer Richtung und/oder umfangsseitig an dem Werkzeugkopf (14) verteilt angeordnet sind, wobei die in radialer Richtung nach außen weisenden Hartmetall- und/oder Diamantstifte den maximalen Durchmesser des Werkzeugs definieren, **dadurch gekennzeichnet, dass** der Werkzeugkopf (14) wenigstens einen seitlich durchgehenden Schlitz (20) aufweist, der sich ausgehend von einer Stirnseite (22) des Werkzeugkopfs (14) axial entlang einer Werkzeuglängsachse (A) erstreckt, und dass die Hartmetall- und/oder Diamantstifte auf einer äußeren Mantelfläche des im Wesentlichen kreiszylinderförmig ausgeführten Werkzeugkopfs (14) angeordnet sind.

2. Werkzeug nach Anspruch 1, **dadurch gekennzeichnet, dass** der Werkzeugkopf (14) wenigstens zwei sich entlang des Schlitzes (20) erstreckende, radial federnde Stege (24) aufweist, die an ihren an die Stirnseite (22) angrenzenden, freien Endabschnitten (26) die umfangsseitigen Schneidmittel (18) tragen.

3. Werkzeug nach einem der Ansprüche 1 oder 2, **dadurch gekennzeichnet, dass** der Werkzeugkopf (14) wenigstens zwei sich kreuzende Schlitze (20) aufweist, die sich ausgehend von einer Stirnseite (22) des Werkzeugkopfs (14) axial entlang der Werkzeuglängsachse (A) erstrecken.

4. Werkzeug nach Anspruch 3, **dadurch gekennzeichnet, dass** ein erster Schlitz (20) entlang der Werkzeuglängsachse (A) eine größere Länge aufweist, als ein zweiter Schlitz (20).

5. Werkzeug nach einem der Ansprüche 3 oder 4, **dadurch gekennzeichnet, dass** die Schlitze (20) sich unter einem Winkel kleiner oder gleich 90° kreuzen.

6. Werkzeug nach einem der Ansprüche 1 bis 5, **dadurch gekennzeichnet, dass** das Werkzeug (10) symmetrisch gestaltet ist.

7. Werkzeug nach einem der Ansprüche 1 bis 6, **dadurch gekennzeichnet, dass** der Schlitz (20) an seinem der Stirnseite (22) abgewandten Grund eine Ausrundung (30) aufweist.

8. Werkzeug nach einem der Ansprüche 1 bis 7, **dadurch gekennzeichnet, dass** der Werkzeugkopf (14) im Wesentlichen zylinderförmig ist und/oder eine ballige Außenkontur hat.

9. Werkzeug nach einem der Ansprüche 1 bis 8, **dadurch gekennzeichnet, dass** der Kopplungsabschnitt (12) an einem ersten Ende eines Werkzeugschafts (16) und der Werkzeugkopf (14) an einem entgegengesetzten, zweiten Ende des Werkzeugschafts (16) angeordnet ist, wobei der Werkzeugschaft (16) in axialer Richtung (a) wenigstens die doppelte, bevorzugt wenigstens die dreifache Länge des Werkzeugkopfs (14) aufweist.

10. Werkzeug nach Anspruch 9, **dadurch gekennzeichnet, dass** der Werkzeugschaft (16) einen geringeren Durchmesser aufweist als der Werkzeugkopf (14).

11. Werkzeug nach einem der Ansprüche 1 bis 10, **dadurch gekennzeichnet, dass** der Schlitz (20) zumindest abschnittsweise mit einem elastischen Füllmaterial, insbesondere einem Elastomer, gefüllt ist.

12. Werkzeug nach einem der Ansprüche 1 bis 11, **dadurch gekennzeichnet, dass** der Werkzeugkopf (14) eine sich ausgehend von der Stirnseite (22) entlang der Werkzeuglängsachse (A) erstreckende, zylindrische Ausnehmung (32), insbesondere eine Bohrung, aufweist.

13. Werkzeug nach einem der Ansprüche 1 bis 12, **dadurch gekennzeichnet, dass** im Bereich des Werkzeugkopfs (14) zusätzlich zu den umfangsseitigen Schneidmitteln (18) eine geometrisch bestimmte Schneidengeometrie (34) vorgesehen ist, insbesondere nach Art eines Bohrers.

14. Werkzeug nach einem der Ansprüche 1 bis 13, **dadurch gekennzeichnet, dass** der zumindest eine Schlitz durch die Mittelachse des Werkzeugs verläuft.

15. Werkzeug nach einem der Ansprüche 1 bis 14, **dadurch gekennzeichnet, dass** der zumindest eine Schlitz (20, 20') entlang der Werkzeuglängsachse (A) unterschiedliche Breiten aufweist.

## Claims

1. Tool for roughening a borehole surface, comprising a coupling portion (12) for clamping the tool (10) in a drilling device and a tool head (14) for machining the borehole surface, cutting means (18) being provided which are arranged on the circumference of the tool head (14), the cutting means (18) comprising at least two carbide and/or diamond pins pointing radially away from the tool longitudinal axis, which pins are arranged so as to be distributed in the axial direction and/or on the circumference of the tool head (14), the carbide and/or diamond pins pointing outward in the radial direction defining the maximum diameter of the tool, **characterized in that** the tool head (14) has at least one laterally continuous slit (20) which extends axially along a tool longitudinal axis (A) from an end face (22) of the tool head (14), and **in that** the carbide and/or diamond pins are arranged on an outer lateral surface of the substantially circular-cylindrical tool head (14).

2. Tool according to claim 1, **characterized in that** the tool head (14) has at least two radially resilient struts (24) which extend along the slit (20) and which, on the free end portions (26) thereof that adjoin the end face (22), support the circumferential cutting means (18).

3. Tool according to either claim 1 or claim 2, **characterized in that** the tool head (14) has at least two intersecting slits (20) which extend axially along the tool longitudinal axis (A) from an end face (22) of the tool head (14).

4. Tool according to claim 3, **characterized in that** a first slit (20) has a greater length along the tool longitudinal axis (A) than a second slit (20).

5. Tool according to either claim 3 or claim 4, **characterized in that** the slits (20) intersect at an angle less than or equal to 90°.

6. Tool according to any of claims 1 to 5, **characterized in that** the tool (10) is symmetrical.

7. Tool according to any of claims 1 to 6, **characterized in that** the slit (20) has a rounded portion (30) on its base which is remote from the end face (22).

8. Tool according to any of claims 1 to 7, **characterized in that** the tool head (14) is substantially cylindrical and/or has a convex outer contour.

9. Tool according to any of claims 1 to 8, **characterized in that** the coupling portion (12) is arranged at a first end of a tool shank (16) and the tool head (14) is arranged at an opposite second end of the tool shank (16), the tool shank (16) being at least twice, preferably at least three times the length of the tool head (14) in the axial direction (a).

10. Tool according to claim 9, **characterized in that** the tool shank (16) has a smaller diameter than the tool head (14).

11. Tool according to any of claims 1 to 10, **characterized in that** the slit (20) is at least partially filled with an elastic filling material, in particular an elastomer.

12. Tool according to any of claims 1 to 11, **characterized in that** the tool head (14) has a cylindrical recess (32), in particular a bore, which extends along the tool longitudinal axis (A) from the end face (22).

13. Tool according to any of claims 1 to 12, **characterized in that** a geometrically defined cutting geometry (34), in particular in the manner of a drill, is provided in the region of the tool head (14) in addition to the circumferential cutting means (18).

14. Tool according to any of claims 1 to 13, **characterized in that** the at least one slit extends through the central axis of the tool.

15. Tool according to any of claims 1 to 14, **characterized in that** the at least one slit (20, 20') has different widths along the tool longitudinal axis (A).

## Revendications

1. Outil de rugosification de la surface d'un trou de forage, comportant une partie d'accouplement (12) permettant de serrer l'outil (10) dans un appareil de forage, et une tête d'outil (14) permettant d'usiner la surface du trou de forage, des moyens de coupe (18) disposés sur la circonférence étant montés sur la tête d'outil (14), les moyens de coupe (18) comprenant au moins deux tiges en métal dur et/ou en diamant pointant radialement à l'opposé de l'axe longitudinal d'outil, lesquelles tiges sont disposées de manière répartie dans la direction axiale et/ou sur la circonférence de la tête d'outil (14), les tiges en métal dur et/ou en diamant pointant vers l'extérieur dans la direction radiale définissant le diamètre maximal de l'outil, **caractérisé en ce que** la tête d'outil (14) présente au moins une fente latérale continue (20) qui, à partir d'une face frontale (22) de la tête d'outil (14), s'étend axialement le long d'un axe longitudinal d'outil (A), et **en ce que** les tiges en métal dur et/ou en diamant sont disposées sur une surface d'enveloppe extérieure de la tête d'outil (14) réalisée en forme essentiellement cylindrique circulaire.

2. Outil selon la revendication 1, **caractérisé en ce que** la tête d'outil (14) présente au moins deux entretoises (24) radialement élastiques s'étendant le long de la fente (20), lesquelles entretoises portent, à leurs parties d'extrémité (26) libres adjacentes à la face frontale (22), des moyens de coupe (18) circonférentiels.

3. Outil selon l'une des revendications 1 ou 2, **caractérisé en ce que** la tête d'outil (14) présente au moins deux fentes croisées (20) qui, à partir d'une face frontale (22) de la tête d'outil (14), s'étendent axialement le long de l'axe longitudinal d'outil (A).

4. Outil selon la revendication 3, **caractérisé en ce qu'**une première fente (20) présente une plus grande longueur le long de l'axe longitudinal d'outil (A) que celle d'une seconde fente (20).

5. Outil selon l'une des revendications 3 ou 4, **caractérisé en ce que** les fentes (20) se croisent selon un angle inférieur ou égal à 90°.

6. Outil selon l'une des revendications 1 à 5, **caractérisé en ce que** l'outil (10) est conçu de manière symétrique.

7. Outil selon l'une des revendications 1 à 6, **caractérisé en ce que** la fente (20) présente une partie arrondie (30) sur sa base opposée à la face frontale (22).

8. Outil selon l'une des revendications 1 à 7, **caractérisé en ce que** la tête d'outil (14) est de forme essentiellement cylindrique et/ou présente un contour extérieur convexe.

9. Outil selon l'une des revendications 1 à 8, **caractérisé en ce que** la partie d'accouplement (12) est disposée à une première extrémité d'une tige d'outil (16) et la tête d'outil (14) est disposée à une seconde extrémité opposée de la tige d'outil (16), la tige d'outil (16) étant, dans la direction axiale (a), au moins deux fois, de préférence au moins trois fois plus longue que la tête d'outil (14).

10. Outil selon la revendication 9, **caractérisé en ce que** la tige d'outil (16) présente un diamètre plus petit que celui de la tête d'outil (14).

11. Outil selon l'une des revendications 1 à 10, **caractérisé en ce que** la fente (20) est au moins partiellement remplie d'un matériau de remplissage élastique, notamment d'un élastomère.

12. Outil selon l'une des revendications 1 à 11, **caractérisé en ce que** la tête d'outil (14) présente un évidement cylindrique (32), notamment un alésage, qui s'étend à partir de la face frontale (22) le long de l'axe longitudinal d'outil (A).

13. Outil selon l'une des revendications 1 à 12, **caractérisé en ce qu'**une géométrie de coupe (34) déterminée géométriquement est prévue, notamment à la manière d'un foret, dans la zone de la tête d'outil (14) en plus des moyens de coupe (18) circonférentiels.

14. Outil selon l'une des revendications 1 à 13, **caractérisé en ce que** l'au moins une fente traverse l'axe central de l'outil.

15. Outil selon l'une des revendications 1 à 14, **caractérisé en ce que** l'au moins une fente (20, 20') présente des largeurs différentes le long de l'axe longitudinal d'outil (A).
